# EUROPÄISCHE PATENTANMELDUNG

(11) **EP 3 109 218 A1**
(43) Veröffentlichungstag der Anmeldung: **28.12.2016**
(21) Anmeldenummer: 16175070.8
(22) Anmeldetag: 17.06.2016
(51) Int. Cl.: C04B 28/14, C04B 40/00

(54) **ABBINDEVERZÖGERER FÜR GIPS**

(30) Priorität: 23.06.2015 DE 102015007955
(71) Anmelder: Jungbunzlauer International AG, 4002 Basel (CH)
(72) Erfinder: Koelbig, Stefan, 71638 Ludwigsburg (DE); Knörr, Walter, 89257 Illertissen (DE); Lenz, Dirk, 4059 BASEL (CH)
(74) Vertreter: Wagner, Jutta

(57) **Zusammenfassung**

Die vorliegende Erfindung betrifft eine Abbindeverzögerermischung für Gipsbaustoffe, umfassend Weinsäure und Gluconodeltalacton oder Natriumgluconat, wobei das Gewichtsverhältnis von Weinsäure zu Gluconodeltalacton im Bereich von 1:2,1 bis 1:5,6 liegt oder das Gewichtsverhältnis von Weinsäure zu Natriumgluconat im Bereich von 1:2,4 bis 1:4,5 liegt, sowie ein Verfahren zur Verzögerung des Abbindens von Gipsbaustoffen, umfassend Bereitstellen eines Gipsbaustoffes und Zugeben von Weinsäure und Gluconodeltalacton oder Natriumgluconat, wobei das Gewichtsverhältnis von Weinsäure zu Gluconodeltalacton im Bereich von 1:2,1 bis 1:5,6 beträgt oder das Gewichtsverhältnis von Weinsäure zu Natriumgluconat im Bereich von 1:2,4 bis 1:4,5 beträgt, vor oder beim Anmachen des Gipsbaustoffes mit Wasser.

## Beschreibung

Die vorliegende Erfindung betrifft eine Abindeverzögerermischung für Gips und ein Verfahren zur Verzögerung des Abbindens von Gips.

Gips ist eine viel genutzte Baustoffkomponente. Vor allem im Innenbereich wird Gips als Bindemittel für Baustoffe wie Estrich und Putz verwendet. Daneben erfolgt eine Verarbeitung zu sog. Gipskartonplatten. Im Rahmen der vorliegenden Erfindung wird die Bezeichnung Gipsbaustoff oder kurz Baustoff für solche Mischungen verwendet, in denen Gips als Bindemittel vorliegt und die nach einem Anmachen mit Wasser und Formen durch Hydratation des Gips erhärten.

Da Gips ohne verzögernde Zusatzmittel sehr schnell abbindet, wurden schon sehr viele Vorschläge zur Verlängerung der Verarbeitungszeit gemacht. So ist bekannt, dass Phosphate, Polyacrylate und Fruchtsäuren sowie deren Derivate wie Zitronensäure, Weinsäure, Gluconate etc. das Abbinden von Gips verzögern. Aus der DE 22 26 943 C3 ist es bekannt, zusätzlich zu einem Verzögerer, bevorzugt wird eine Mischung von Natriumglukonat und Natriumtripolyphosphat, Glyoxal einzusetzen. Die EP 2 730 550 A2 schlägt den Einsatz einer Mischung von Natriumpolyacrylat bestimmter Molmassen und Kieselsäure vor. DE 10 2004 040 879 B3 beschreibt eine Mischung von Natriumtrimetaphosphat und Weinsäure. In der Praxis werden überwiegend Weinsäure oder Zitronensäure eingesetzt.

Da Weinsäure nur als L-Enantiomer wirksam ist, die in der Verfügbarkeit und damit im Preis starken Schwankungen unterliegt, besteht weiterhin Bedarf an einer preisgünstigen, preisstabilen und wirksamen Verzögerung für Gipsbaustoffe, insbesondere für Putzgips. Wichtig ist dabei nicht nur die reine Verzögerungsleistung, sondern auch die Kontrolle möglicher Einflüsse auf die Eigenschaften bei der Verarbeitung und des abgebundenen Baustoffs.

Überraschend wurde nun gefunden, dass Gemische aus Weinsäure und Gluconodeltalacton oder Natriumgluconat in bestimmten Mischungsverhältnissen eine synergistische Verzögerungswirkung zeigen und die Anforderungen erfüllen können. Mit geeigneten Mengen lassen sich brauchbare Verzögerungsleistungen einstellen, die Verarbeitungseigenschaften eines Maschinengipsputzes konnten verbessert werden.

Die Erfindung löst daher die obige Aufgabe durch eine Abbindeverzögerermischung für Gipsbaustoffe, insbesondere für Gipsputz, die Weinsäure und Gluconodeltalacton oder Natriumgluconat umfasst, wobei das Gewichtsverhältnis von Weinsäure zu Gluconodeltalacton im Bereich von 1:2,1 bis 1:5,6 liegt oder das Gewichtsverhältnis von Weinsäure zu Natriumgluconat im Bereich von 1:2,4 bis 1:4,5 liegt. Die Aufgabe wird weiter durch ein Verfahren zur Verzögerung des Abbindens von Gipsbaustoffen, insbesondere von Gipsputz, gelöst, bei dem man den Gipsbaustoff bereitstellt und vor oder beim Anmachen mit Wasser Weinsäure und Gluconodeltalacton oder Natriumgluconat zufügt, wobei das Gewichtsverhältnis von Weinsäure zu Gluconodeltalacton im Bereich von 1:2,1 bis 1:5,6 beträgt oder das Gewichtsverhältnis von Weinsäure zu Natriumgluconat im Bereich von 1:2,4 bis 1:4,5 beträgt.

Anstelle von Natriumgluconat können auch andere in wässriger Lösung ausreichend schnell oder gut lösliche Salze der Gluconsäure verwendet werden, was aber im Hinblick auf die Kosten weniger bevorzugt ist. Es wird erwartet, dass Alkali- und Erdalkaligluconate, beispielsweise Kalium-, Calcium-, oder Magnesiumgluconat, genauso wirksam sind. Die Mengenverhältnisse sind entsprechend den Molgewichten anzupassen.

Der Gipsbaustoff ist insbesondere ein Gipsputz und kann nach DIN EN 13279-1 in Putz- und Stuckgips einerseits und in Fertigputzgips, Haftputzgips, und Maschinenputzgips andererseits unterschieden werden. Der in dem Baustoff enthaltene Gips kann in an sich bekannter Weise durch Brennen von Calciumsulfatdihydrat aus Gipsabbaustätten und Mahlen des gebrannten Produkts hergestellt werden. Daneben kann Gips aus Rauchgasentschwefelungsanlagen (REA Gips) und Gips als Beiprodukt aus chemischen Prozessen z.B. Herstellung von Phosphaten oder organischen Säuren wie Zitronsensäure, verwendet werden.

Die Gruppe der Fertiggipsputze enthält üblicherweise Zusatzstoffe und Zusatzmittel sowie Zuschläge. Als Zusatzstoffe können z. B. Füllstoffe, Fasern, Pigmente und Baukalk beigemischt werden. Als Zusatzmittel sind die erfindungsgemäße Abbindeverzögerermischung sowie optional zusätzlich luftporenbildende, wasserrückhaltende und/oder verflüssigende Stoffe enthalten, um die Eigenschaften des Trockenmörtels zu verbessern oder besondere Eigenschaften zu erhalten. Außerdem können weitere Verzögerer oder Zusätze, welche die Verzögerung optimieren, enthalten sein. Zuschläge sind natürliche oder synthetische Materialien oder Materialien aus der Wiederverwertung, die für die Anwendung in Gebäuden geeignet sind, z. B. Quarzsand, gebrochener Kalkstein und Leichtzuschläge wie Perlite und Vermiculite.

Fertiggipsputze enthalten in der Regel 50 bis 90 Gew.-% Gips, 1 bis 5 Gew.-% Kalk, 10 bis 30 Gew.-% Füllstoffe (Sand, gebrochener Kalkstein, Leichtzuschlag) und 0,01 bis 0,5 Gew.-% Abbindeverzögerer. Typischerweise sind außerdem Luftporenbildner (0,01 bis 0,1 Gew.-%) sowie Wasserrückhaltemittel (0,01 bis 1,0 Gew.-%) wie Stärke und/oder Methylzellulose enthalten. Neben solchen Fertiggipsputzen sind auch Gips-haltige Putztrockenmörtel mit weniger als 50 Gew.-% Gips und Gipskalk-Putztrockenmörtel mit mehr als 5 Gew.-% Kalk gebräuchlich.

Darüberhinaus kann der Gipsbaustoff auf einer Kombination von Zement und Gips als Bindemittel basieren.

Die erfindungsgemäße Abbindeverzögerermischung umfasst ein Gemisch aus Weinsäure und Gluconodeltalacton oder Natriumgluconat. Das Gewichtsverhältnis der beiden Komponenten liegt für Gluconodeltalacton im Bereich Weinsäure:Gluconodeltalacton von 1:2,1 bis 1:5,6, vorzugsweise von 1:2,5 bis 1:4 und insbesondere bei etwa 1:3,0 bis 1:3,3. Für Natriumgluconat beträgt das Gewichtsverhältnis Weinsäure:Natriumgluconat von 1:2,4 bis 1:4,5, vorzugsweise von 1:3,0 bis 1:4,2 und insbesondere etwa 1:3,5 bis 1:4,0.

Weinsäure, Gluconodeltalacton und Gluconat sollten in einer Partikelgröße eingesetzt werden, die eine gute Verteilung in der Trockenmischung gewährleistet. Brauchbar sind daher üblicherweise maximale Partikelgrößen von 300 µm, vorzugsweise von < 65 µm.

Die Dosierung der erfindungsgemäßen Abbindeverzögerermischung liegt üblicherweise im Bereich von 0,01 bis 0,5 Gew.-%, vorzugsweise von 0,05 bis 0,3 Gew.-%, insbesondere von 0,1 bis 0,2 Gew.-%, bezogen auf die Trockenmasse des Gipsbaustoffs. Die optimale Menge hängt auch vom konkreten Baustoff ab, beispielsweise von der Brenntemperatur mit der der Gips hergestellt wurde, den weiteren Bestandteilen im Baustoff und auch von der beim Anmachen des Baustoffs mit Wasser zugeführten Mischenergie.

In einer Ausführungsform wird die Abbindeverzögerermischung einem Gipsbaustofftrockengemisch, insbesondere einem Putztrockenmörtel, zugefügt. Hierbei können die Komponenten natürlich auch einzeln der Trockenmischung zugesetzt werden.

In einer weiteren Ausführungsform wird die Abindeverzögerermischung als separates Zusatzmittel bereitgestellt. Die Zugabe/Dosierung erfolgt in diesem Fall insbesondere beim Anmachen des Gipsbaustoffes mit Wasser. Vorzugsweise wird hierbei der Abbindeverzögerermischung eine Rieselhilfe als weitere Komponente zugemischt, insbesondere in einer Konzentration von 2 - 4 Gew.-% bezogen auf die Masse der Abbindeverzögerermischung. Geeignet ist beispielsweise pyrogene Kieselsäure, kommerziell erhältlich z.B. unter den Handelsnamen: SIPERNAT®, AEROSIL®, Cabosil®, HDK®.

Es ist außerdem möglich, die erfindungsgemäße Abbindeverzögerermischung mit weiteren Zusatzmitteln zu kombinieren, beispielweise mit Luftporenbildnern, Konsistenzhilfsmitteln und/oder Verflüssigern. Auch weitere Verzögerer können enthalten sein und/oder Zusätze welche die Verzögerung optimieren.

Gemäß dem erfindungsgemäßen Verfahren wird das Abbinden von Gips in Gipsbaustoffen wie Gipsputz durch Zugabe von Weinsäure und Gluconodeltalacton oder Natriumgluconat verzögert. Dabei kann die erfindungsgemäße Abbindeverzögerermischung oder deren Komponenten dem Trockenbaustoff zugefügt werden und/oder die Abbindeverzögerermischung wird beim Anmachen mit Wasser dem Baustoff zugemischt, oder man fügt die Komponenten separat zu. Wenn die Komponenten separat zugemischt werden, ist es auch möglich eine dem Trockenbaustoff und die andere beim Anmachen mit Wasser zuzugeben.

Durch die erfindungsgemäße Abbindeverzögerermischung und das erfindungsgemäße Verfahren werden brauchbare Zeiten von 60 min bis 120 min bis zum Versteifungsbeginn erzielt, das Verhalten von Putzmörteln beim Abziehen, Glätten und Filzen ist gut.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

Ein Gipsputz-Trockenmörtel mit der in Tabelle 1 angegebenen Standardrezeptur wurde hergestellt.

**Tabelle 1**

| Komponente | Gehalt |
|---|---|
| Niederbrandgips | 40 % |
| Hochbrandgips | 40 % |
| Kalkhydrat | 1,5 % |
| Füllstoff: zB gebrochener Kalkstein | 15 % |
| Perlite | 3 % |
| Methylzellulose | 0,20 % |

Die zu untersuchenden Abbindeverzögerer wurden in Mengen von 0,1 und 0,13 Gew.-% zugefügt.

Die Bestimmung des Versteifungsbeginns und -endes erfolgten durch Messung der Ultraschalllaufzeit und durch die Vicat-Dettki-Methode. Für die Ultraschalllaufzeitmessung wurden 300 g Mörtel mit 186 g Wasser (deionisiert) in einem Mörtelmischer nach DIN EN 1015-2 angemacht. Dabei erfolgte das Einfüllen über 30 s und das Mischen über 60 s. Die Mischung wurde in die Messform gefüllt, 20 s bei Amplitude 1,00 verdichtet und der erste Messpunkt nach ca. 3 min. aufgenommen. Bei den Messungen nach der Vicat Dettki Methode wurden ebenfalls 300 g Mörtel und 186 g Wasser (deionisiert) verwendet. Der Putzmörtel wurde in das Wasser eingestreut und 60 s mit den Knethaken eines Handmixers (Stufe 2) gemischt. Dann wurde die Mischung in einen Becher gefüllt und durch leichtes Aufstampfen verdichtet. Die Bestimmung des Abbindeverhaltens erfolgte dann nach DIN EN 13279-2 über die Messung der Eindringtiefe einer Nadel.

### Beispiel 1

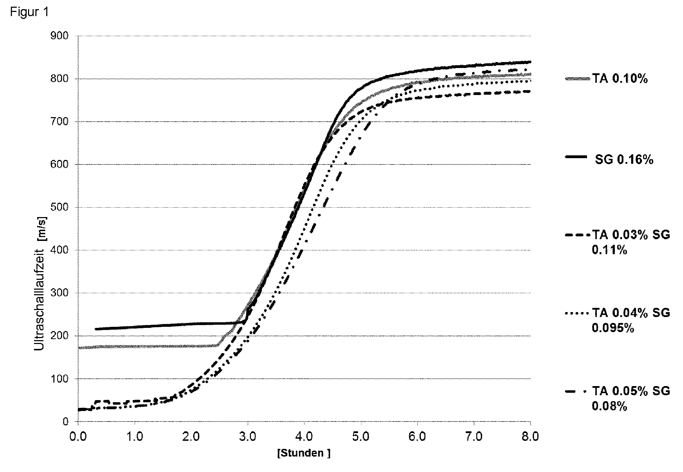

Als Verzögerer wurden Gemische von Weinsäure (Partikelgröße < 63 µm) und Natriumgluconat (max 2 % Partikel > 300 µm) eingesetzt, sowie die beiden Einzelsubstanzen. Natriumgluconat wurde als Gemisch mit 2 Gew.-% pyrogener Kieselsäure (Sipernat®) verwendet. Es wurden Abbindeverzögerermischungen mit verschiedenen Gewichtsverhältnissen Weinsäure zu Natriumgluconat erstellt und mittels Messung der Ultraschalllaufzeit sowie nach der Vicat Dettki Methode das Abbindeverhalten untersucht. Die Ergebnisse der Ultraschalllaufzeitmessung sind in Figur 1 dargestellt.

Aus Figur 1 ist ersichtlich, dass die Wirkung von Natriumgluconat (SG) um einen Faktor 1,6 geringer ist als die von Weinsäure (TA), Weinsäure erreicht bei 0,1 % die gleiche Verzögerung wie Natriumgluconat bei 0,16 %. Die Mischungen zeigen eine gleich gute oder bessere Verzögerung.

Mit der Vicat Dettki Methode wurden Versteifungsbeginn (VB) und Versteifungsende (VE), bei dem in der Praxis ein Glätten nicht mehr möglich ist, bestimmt. Die Ergebnisse sind in der Tabelle 2 dargestellt.

**Tabelle 2**

| Verzögerer 1 | Verzögerer 2 | TA:SG | VB [min] | VE [min] | VE - VB [min] |
|---|---|---|---|---|---|
| 0,1 % TA | Ohne | ./. | 128 | 205 | 77 |
| 0,16 % SG | Ohne | ./. | 124 | 208 | 84 |
| 0,16 % SG | Ohne | ./. | 122 | 203 | 81 |
| 0,03 % TA | 0,11 % SG | 1:3,6 | 127 | 219 | 92 |
| 0,04 % TA | 0,095 % SG | 1:2,4 | 142 | 225 | 83 |
| 0,05 % TA | 0,08 % SG | 1:1,6 | 145 | 232 | 87 |
| 0,06 % TA | 0,065 % SG | 1:1,1 | 129 | 202 | 73 |

Wie schon aus der Ultraschalllaufzeitmessung entnehmbar, entsprach eine Dosierung Natriumgluconat von 0,16 % in der Wirkung etwa der Wirkung von 0,1 % Weinsäure. Die Mengen an Natriumgluconat in den Mischungen wurden so berechnet, dass die Summe der erwarteten Wirkungen der Einzelsubstanzen der Wirkung der Einzelsubstanzen entsprechen sollte. Die erfindungsgemäßen Mischungen zeigten aber eine signifikant bessere Verzögerungswirkung. Zwar war auch bei einem Mischungsverhältnis Weinsäure: Natriumgluconat von 1: 1,6 die Wirkung noch verbessert, diese Mischung ist aber wegen der hohen Menge Weinsäure im Hinblick auf die Kosten nicht brauchbar.

### Beispiel 2

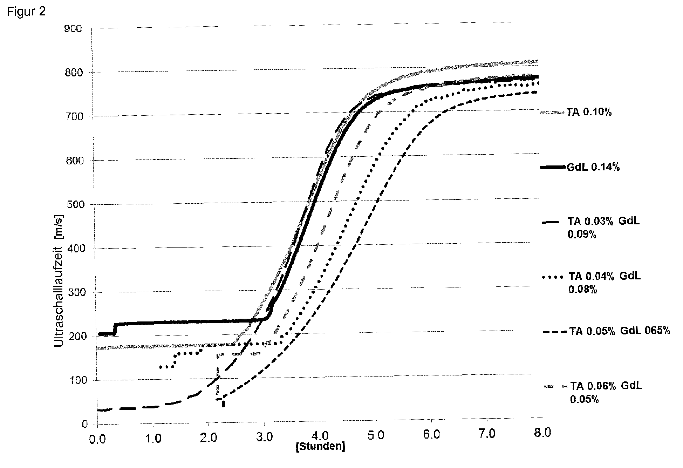

Als Verzögerer wurden Gemische von Weinsäure (Partikelgröße < 63 µm) und Gluconodeltalacton (max 10 % Partikel > 63 µm) eingesetzt, sowie die beiden Einzelsubstanzen. Gluconodeltalacton wurde als Gemisch mit 2 Gew.-% pyrogener Kieselsäure (Sipernat®) verwendet. Es wurden Abbindeverzögerermischungen mit verschiedenen Gewichtsverhältnissen Weinsäure zu Gluconodeltalacton erstellt und mittels Messung der Ultraschalllaufzeit sowie nach der Vicat Dettki Methode das Abbindeverhalten untersucht. Die Ergebnisse der Ultraschalllaufzeitmessung sind in Figur 2 dargestellt. Es ist ersichtlich, dass die Wirkung von Gluconodeltalacton (GdL) um einen Faktor 1,4 geringer ist als die von Weinsäure (TA), Weinsäure erreicht bei 0,1 % die gleiche Wirkung wie Gluconodeltalacton bei 0,14 %. Die Mischungen zeigen eine gleich gute oder bessere Wirkung.

Mit der Vicat Dettki Methode wurden Versteifungsbeginn (VB) und Versteifungsende (VE), bei dem in der Praxis ein Glätten nicht mehr möglich ist, bestimmt. Die Ergebnisse sind in der Tabelle 3 dargestellt.

**Tabelle 3**

| Verzögerer 1 | Verzögerer 2 | TA:GdL | VB [min] | VE [min] | VE - VB [min] |
|---|---|---|---|---|---|
| 0,1 % TA | Ohne | ./. | 128 | 205 | 77 |
| 0,14 % GdL | Ohne | ./. | 130 | 209 | 79 |
| 0,03 % TA | 0,09 % GdL | 1:3,0 | 140 | 240 | 100 |
| 0,04 % TA | 0,08 % GdL | 1:2,0 | 142 | 223 | 81 |
| 0,06 % TA | 0,05 % GdL | 1:0,8 | 120 | 196 | 76 |

Wie schon aus der Ultraschalllaufzeitmessung entnehmbar, entsprach eine Dosierung Gluconodeltalacton von 0,14 % in der Wirkung etwa der Wirkung von 0,1 % Weinsäure. Die Mengen an Gluconodeltalacton in den Mischungen wurden so berechnet, dass die Summe der erwarteten Wirkungen der Einzelsubstanzen der Wirkung der Einzelsubstanzen entsprechen sollte. Die erfindungsgemäßen Mischungen zeigten aber eine signifikant bessere Verzögerungswirkung.

### Beispiel 3

Mit den in Tabelle 4 angegebenen Verzögerern und Verzögerermischungen wurde Maschinenputz angemacht und in einem Anwendungstest auf eine Wand aus Hohlziegeln aufgespritzt. Der Untergrund ist als saugend einzustufen.

**Tabelle 4**

| **Verzögerer 1** | **Verzögerer 2** | **Gesamtmenge** |
|---|---|---|
| 0,13 % Weinsäure | ./. | 0,13% |
| ./. | 0,209 % Natriumgluconat | 0,209 % |
| ./. | 0,182 % Gluconodeltalacton | 0,182% |
| 0,039 % Weinsäure | 0,145 % Natriumgluconat | 0,184% |
| 0,039 % Weinsäure | 0,127 % Gluconodeltalacton | 0,166 % |

Die Verarbeitungsschritte des Maschinengipsputzes auf der Wand umfasst eine Serie von Verabeitungsschritten und benötigt insgesamt etwa eine Verarbeitungszeit von 3 Stunden, vgl. Hecker et al. Tech line document; Dow Construction Chemicals.

Die angemachten Putze wurden auf die Wand aufgespritzt und innerhalb 5 Minuten unterschiedliche Auftragsstärken ausgeglichen (Aufziehen). Nach 60 bis 80 Minuten erfolgte das Abziehen. Nach etwa 120 Minuten erfolgte ein grobes Glätten. Dabei wird die Oberfläche des Gipsputzes mit Wasser benetzt und dann mit einem Schwamm abgerieben. Dadurch erhält man eine feine Schlämme an der Oberfläche, die fein verteilt wird. Nach etwa 150 Minuten erfolgt eine erste Feinglättung (Filzen) und nach etwa 180 Minuten das abschließende Glätten (Fertigfilzen). Bei den beiden Feinglättschritten ist für den Stukkateur entscheidend, welche Kraft er aufbringen muss, um mit der Traufel die glatte Oberfläche zu erreichen. Die Verarbeitungseigenschaften für jeden Schritt wurden vom Stukkateur mit Noten bewertet, und zwar 1 für sehr gut, 2 für gut, 3 für befriedigend, 4 für ausreichend und 5 für mangelhaft. Die Ergebnisse sind in Tabelle 5 aufgelistet.

**Tabelle 5**

| Verzögerer | TA | SG | GdL | TA+SG | TA+GdL |
|---|---|---|---|---|---|
| Abziehen | 2,5 | 2,5 | 2 | 2 | 1,5 |
| erstes Feinglätten | 2 | 2 | 2 | 2 | 2 |
| abschließendes Glätten | 3 | 3,5 | 3,5 | 2 | 2 |

Es zeigt sich, dass besonders beim letzten Schritt die Verarbeitungseigenschaften der Putzgipse, die die Mischungen Weinsäue/Gluconate enthalten, wesentlich verbessert wurden.

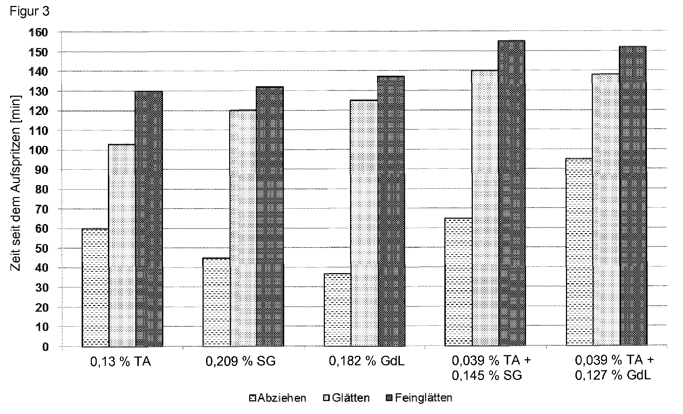

Parallel zu den Verabeitungsversuchen wurde mittels Vicat Dettki Methode die Aushärtung untersucht. Dazu wurden beim ersten Arbeitsschritt (Aufspritzen) Proben des Gipsputzes entnommen und dann der Aushärtevorgang dokumentiert. Die verfügbaren Verarbeitungszeiten waren bei den erfindungsgemäß verzögerten Putzen länger, wie sich aus Figur 3 und Tabelle 6 ergibt.

**Tabelle 6**

| Verzögerer | VB [min.] | VE [min.] | VB-VE [min.] |
|---|---|---|---|
| 0,13%TA | 73 | 127 | 162 |
| 0,209 % SG | 62 | 131 | 158 |
| 0,182 % GdL | 77 | 140 | 165 |
| 0,039 % TA+0,145 % SG | 89 | 144 | 197 |
| 0,039 % TA + 0,127 % GdL | 106 | 192 | 239 |

Die Zeiten für Versteifungsbeginn (VB) und Versteifungsende (VE) zeigten analog zu den Anwendungsversuchen an der Wand einen deutlichen Unterschied der einzelnen Verzögerer zu den Verzögergemischen: Die Gemische zeigten einen deutlich verzögerten Beginn der Versteifung. Die Verarbeitungszeit VE-VB liegt über der der reinen Verzögerer.

## Patentansprüche

1. Abbindeverzögerermischung für Gipsbaustoffe, umfassend Weinsäure und Gluconodeltalacton oder Natriumgluconat, wobei das Gewichtsverhältnis von Weinsäure zu Gluconodeltalacton im Bereich von 1:2,1 bis 1:5,6 liegt oder das Gewichtsverhältnis von Weinsäure zu Natriumgluconat im Bereich von 1:2,4 bis 1:4,5 liegt.

2. Abbindeverzögerermischung gemäß Anspruch 1, **dadurch gekennzeichnet, dass** Weinsäure und Gluconodeltalacton in einem Gewichtsverhältnis von 1:2,5 bis 1:4,0 und vorzugsweise von 1:3,0 bis 1:3,3 enthalten sind.

3. Abbindeverzögerermischung gemäß Anspruch 1, **dadurch gekennzeichnet, dass** Weinsäure und Natriumgluconat in einem Gewichtsverhältnis von 1:3,0 bis 1:4,2 und vorzugsweise von 1:3,5 bis 1:4,0 enthalten sind.

4. Abbindeverzögerermischung gemäß einem der Ansprüche 1 bis 3, **dadurch gekennzeichnet, dass** eine Rieselhilfe, vorzugsweise pyrogene Kieselsäure enthalten ist.

5. Abbindeverzögerermischung gemäß einem der Ansprüche 1 bis 4, **dadurch gekennzeichnet, dass** weitere Zusatzmittel enthalten sind, beispielweise Luftporenbildner, Konsistenzhilfsmittel und/oder Verflüssiger sowie optional weitere Verzögerer oder Zusätze, welche die Verzögerung optimieren.

6. Abbindeverzögerermischung gemäß Anspruch 1, 2, 4 oder 5, **dadurch gekennzeichnet, dass** Kalium-, Calcium-, oder Magnesiumgluconat statt Natriumgluconat enthalten ist, wobei das Gewichtsverhältnis Weinsäure:Erd-alkali- oder Alkaligluconat gemäß dem Molgewichtsverhältnis Natrium-gluconat zu Erdalkali- oder Alkaligluconat angepasst ist.

7. Verfahren zur Verzögerung des Abbindens von Gipsbaustoffen, umfassend Bereitstellen eines Gipsbaustoffes und Zugeben von Weinsäure und Gluconodeltalacton oder Natriumgluconat, wobei das Gewichtsverhältnis von Weinsäure zu Gluconodeltalacton im Bereich von 1:2,1 bis 1:5,6 beträgt oder das Gewichtsverhältnis von Weinsäure zu Natriumgluconat im Bereich von 1:2,4 bis 1:4,5 beträgt, vor oder beim Anmachen des Gipsbaustoffes mit Wasser.

8. Verfahren gemäß Anspruch 7, **dadurch gekennzeichnet, dass** als Gipsbaustoff ein Putzgips, insbesondere ein Maschinenputzgips gewählt wird.

9. Verfahren gemäß Anspruch 7 oder 8, **dadurch gekennzeichnet, dass** Weinsäure und Gluconodeltalacton oder Natriumgluconat zusammen in einer Menge von 0,01 bis 0,5 Gew.-%, vorzugsweise von 0,05 bis 0,3 Gew.-%, insbesondere von 0,1 bis 0,2 Gew.-%, bezogen auf die Trockenmasse des Gipsbaustoffs zugegeben werden.

10. Verfahren gemäß einem der Ansprüche 7 bis 9, **dadurch gekennzeichnet, dass** Weinsäure und Gluconodeltalacton oder Natriumgluconat zusammen oder getrennt einem Gipsbaustofftrockengemisch zugefügt werden.

11. Verfahren gemäß einem der Ansprüche 7 bis 9, **dadurch gekennzeichnet, dass** Weinsäure und Gluconodeltalacton oder Natriumgluconat zusammen oder getrennt beim Anmachen des Gipsbaustoffes mit Wasser zugefügt werden.

12. Verfahren gemäß einem der Ansprüche 7 bis 9, **dadurch gekennzeichnet, dass** Weinsäure und Gluconodeltalacton oder Natriumgluconat getrennt zugefügt werden, wobei eine Komponente einem Gipsbaustofftrockengemisch und die andere Komponente beim Anmachen des Gipsbaustoffes mit Wasser zugefügt wird.
